# EUROPEAN PATENT APPLICATION

(11) **EP 4 664 983 A1**
(43) Date of publication of application: **17.12.2025**
(21) Application number: 23920558.6
(22) Date of filing: 10.02.2023
(51) Int. Cl.: H04W 28/02

(54) **DATA PROCESSING METHODS, APPARATUS AND STORAGE MEDIUM**

(71) Applicant: Beijing Xiaomi Mobile Software Co., Ltd., Beijing 100085 (CN)
(72) Inventor: WU, Jinhua, Beijing 100085 (CN); SHEN, Yang, Beijing 100085 (CN)
(74) Representative: Stöckeler, Ferdinand
(86) International application number: PCT/CN2023/075545
(87) International publication number: WO 2024/164351

(57) **Abstract**

Provided in the present disclosure are data processing methods, an apparatus and a storage medium. A method comprises: determining priority indication information, wherein the priority indication information is used for indicating the priority of multiple types of parameters when a packet data unit (PDU) is discarded. The present disclosure perfects the resource priority scheduling mechanism of QoS flows and data packets, thus better matching service scenarios, and ensuring the QoS of service data transmission.

## Description

### TECHNICAL FIELD

The present disclosure relates to the field of communication technologies, and in particular relates to a data processing method, a device, and a storage medium.

### BACKGROUND

Currently, mobile media-type services, cloud augmented reality (AR), cloud virtual reality (VR) and other extended reality (XR) services and extended services, cloud games, video-based machine or unmanned aerial vehicle remote control services, etc., are expected to contribute more and more traffic to the fifth generation mobile communication technology (5G) network. Correspondingly, a requirement for a quality of service (QoS) of the 5G network is also increasing.

### SUMMARY

Embodiments of the present disclosure provide a data processing method, a device, and a storage medium.

According to a first aspect of embodiments of the present disclosure, a data processing method is provided. The method is performed by a first core network node and includes: determining priority indication information, in which, the priority indication information is used to indicate priority levels of a plurality of types of parameters for packet data unit (PDU) discarding.

Optionally, the priority indication information is used to indicate at least one of: a first priority order of the plurality of types of parameters for the PDU discarding; second priority orders of the plurality of types of parameters for the PDU discarding in different conditions; a third priority order of part of parameter values comprised in one type of parameter over other types of parameters for the PDU discarding; or each type of parameter being applied to cross-flow or inner-flow PDU discarding independently.

Optionally, the plurality of types of parameters include at least one of: a quality of service (QoS) priority parameter; or a PDU set importance parameter.

Optionally, in a case where the priority indication information is used to indicate that each type of parameter is applied to cross-flow or inner-flow PDU discarding independently, a QoS priority parameter is used for cross-flow PDU discarding, and a PDU set importance parameter is used for inner-flow PDU discarding.

Optionally, the priority indication information is further used to indicate at least one of: in response to performing the cross-flow PDU discarding, determining a QoS flow to be discarded based on the QoS priority parameter, and discarding a corresponding QoS flow according to an ascending order of QoS priority levels; or in response to performing the inner-flow PDU discarding, determining a PDU set to be discarded based on the PDU set importance parameter, and discarding a corresponding PDU set according to an ascending order of PDU set importance levels.

Optionally, determining the priority indication information includes at least one of: determining the priority indication information based on information provided by an application function (AF); or determining the priority indication information based on local configuration information of the first core network node.

Optionally, determining the priority indication information includes: in response to receiving no priority indication information provided by an AF, determining that the priority indication information is used to indicate that each type of parameter is applied to cross-flow or inner-flow PDU discarding independently.

Optionally, the method further includes: sending the priority indication information to a radio access network (RAN) device.

Optionally, sending the priority indication information to the RAN device includes: sending the priority indication information to a second core network node, to enable the second core network node to send the priority indication information to the RAN device through a control plane node or a data plane node.

Optionally, the method further includes: sending no priority indication information to the RAN device in response to determining that the priority indication information is used to indicate that each type of parameter is applied to cross-flow or inner-flow PDU discarding independently.

Optionally, the priority indication information is used to indicate the priority levels of the plurality of types of parameters for the PDU discarding in a network congestion scenario.

According to a second aspect of embodiments of the present disclosure, a data processing method is provided. The method is performed by a radio access network (RAN) device and includes: performing packet data unit (PDU) discarding based on priority indication information, in which, the priority indication information is used to indicate priority levels of a plurality of types of parameters for the PDU discarding.

Optionally, the priority indication information is used to indicate at least one of: a first priority order of the plurality of types of parameters for the PDU discarding; second priority orders of the plurality of types of parameters for the PDU discarding in different conditions; a third priority order of part of parameter values comprised in one type of parameter over other types of parameters for the PDU discarding; or each type of parameter being applied to cross-flow or inner-flow PDU discarding independently.

Optionally, the plurality of types of parameters include at least one of: a quality of service (QoS) priority parameter; or a PDU set importance parameter.

Optionally, in a case where the priority indication information is used to indicate that each type of parameter is applied to cross-flow or inner-flow PDU discarding independently, a QoS priority parameter is used for cross-flow PDU discarding, and a PDU set importance parameter is used for inner-flow PDU discarding.

Optionally, the priority indication information is further used to indicate at least one of: in response to performing the cross-flow PDU discarding, determining a QoS flow to be discarded based on the QoS priority parameter, and discarding a corresponding QoS flow according to an ascending order of QoS priority levels; or in response to performing the inner-flow PDU discarding, determining a PDU set to be discarded based on the PDU set importance parameter, and discarding a corresponding PDU set according to an ascending order of PDU set importance levels.

Optionally, performing the PDU discarding based on the priority indication information includes: in response to the priority indication information being used to indicate a first priority order of the plurality of types of parameters for the PDU discarding, determining a first-type parameter sequentially according to the first priority order; and every time determining one first-type parameter, among a plurality of parameter values comprised in the first-type parameter, discarding a PDU corresponding to each of the parameter values sequentially according to a specified order of the parameter values.

Optionally, performing the PDU discarding based on the priority indication information includes: in response to the priority indication information being used to indicate second priority orders of the plurality of types of parameters for the PDU discarding in different conditions, determining a first-type parameter sequentially according to the second priority orders of the plurality of types of parameters in a first condition; and every time determining one first-type parameter, among a plurality of parameter values comprised in the first-type parameter, discarding a PDU corresponding to each of the parameter values sequentially according to a specified order of the parameter values.

Optionally, performing the PDU discarding based on the priority indication information includes: in response to the priority indication information being used to indicate a third priority order of part of parameter values comprised in one type of parameter over other types of parameters for the PDU discarding, determining first parameter values sequentially according to the third priority order; discarding a PDU corresponding to each of the first parameter values sequentially.

Optionally, performing the PDU discarding based on the priority indication information includes: in response to the priority indication information being used to indicate that each type of parameter is applied to cross-flow or inner-flow PDU discarding independently, performing the cross-flow PDU discarding or the inner-flow PDU discarding, respectively.

Optionally, performing the cross-flow PDU discarding or the inner-flow PDU discarding, respectively includes at least one of: in response to the QoS priority parameter being used for the cross-flow PDU discarding, the PDU set importance parameter being used for the inner-flow PDU discarding, and determining that the cross-flow PDU discarding is to be performed, discarding a corresponding QoS flow sequentially according to a descending order of QoS priority levels; or in response to determining that the inner-flow PDU discarding is to be performed, performing discarding of a PDU set within a QoS flow sequentially according to an ascending order of PDU set importance levels.

Optionally, the method further includes: receiving the priority indication information sent by a first network side node.

Optionally, receiving the priority indication information sent by the first network side node includes any one of: receiving the priority indication information sent by a second network side node to an RAN device through a control plane node, wherein the priority indication information is sent by the first network side node to the second network side node; or receiving the priority indication information sent by the second network side node to the RAN device through a data plane node, in which, the priority indication information is sent by the first network side node to the second network side node.

Optionally, the method further includes: in response to receiving no priority indication information, determining that the priority indication information is used to indicate that each type of parameter is applied to cross-flow or inner-flow PDU discarding independently.

Optionally, performing the PDU discarding based on the priority indication information includes: in response to being in a network congestion scenario, performing the PDU discarding based on the priority indication information.

According to a third aspect of embodiments of the present disclosure, a core network device is provided. The device includes: a determination module, configured to determine priority indication information, in which, the priority indication information is used to indicate priority levels of a plurality of types of parameters for packet data unit (PDU) discarding; a sending module, configured to send the priority indication information to a radio access network (RAN) device.

According to a fourth aspect of embodiments of the present disclosure, an access network device is provided. The device includes: a performing module, configured to perform packet data unit (PDU) discarding based on priority indication information, in which, the priority indication information is used to indicate priority levels of a plurality of types of parameters for the PDU discarding.

According to a fifth aspect of embodiments of the present disclosure, a computer-readable storage medium having a computer program stored thereon is provided. The computer program is configured to perform the data processing method as described in any one of the first aspect.

According to a sixth aspect of embodiments of the present disclosure, a computer-readable storage medium having a computer program stored thereon is provided. The computer program is configured to perform the data processing method as described in any one of the second aspect.

According to a seventh aspect of embodiments of the present disclosure, a core network device is provided. The core network device includes: a processor; and a memory for storing executable instructions of the processor. The processor is configured to perform the data processing method as described in any one of the first aspect.

According to an eighth aspect of embodiments of the present disclosure, a core network device is provided. The core network device includes: a processor; and a memory for storing executable instructions of the processor. The processor is configured to perform the data processing method as described in any one of the second aspect.

It should be noted that the foregoing general description and the following detailed description are exemplary and illustrative, and do not constitute a limitation on the present disclosure.

### BRIEF DESCRIPTION OF THE DRAWINGS

The accompanying drawings herein are incorporated into the specification and constitute a part of the specification, illustrate embodiments in conformity with embodiments of the present disclosure, and explain the principle of the present disclosure together with the specification.
FIG. 1 is a schematic flow chart illustrating an architecture of a data processing system according to an illustrative embodiment.
FIG. 2 is a flow chart illustrating a data processing method according to an illustrative embodiment.
FIG. 3A is a flow chart illustrating a data processing method according to an illustrative embodiment.
FIG. 3B is a flow chart illustrating a data processing method according to an illustrative embodiment.
FIG. 4 is a flow chart illustrating a data processing method according to an illustrative embodiment.
FIG. 5 is a flow chart illustrating a data processing method according to an illustrative embodiment.
FIG. 6A is a flow chart illustrating a data processing method according to an illustrative embodiment.
FIG. 6B is a flow chart illustrating a data processing method according to an illustrative embodiment.
FIG. 7 is a block diagram illustrating a core network device according to an illustrative embodiment.
FIG. 8 is a block diagram illustrating an access network device according to an illustrative embodiment.
FIG. 9 is a schematic diagram illustrating a structure of a core network device according to an illustrative embodiment of the present disclosure.
FIG. 10 is a schematic diagram illustrating a structure of an access network device according to an illustrative embodiment of the present disclosure.

### DETAILED DESCRIPTION

The illustrative embodiments will be described in detail here, and examples thereof are shown in the accompanying drawings. When the following descriptions refer to the accompanying drawings, same numbers in different drawings represent same or similar elements unless otherwise indicated. The implementations described in the following illustrative embodiments do not represent all implementations consistent with the present disclosure. Rather, they are merely examples of apparatuses and methods consistent with some aspects of the disclosure as detailed in the appended claims.

The terminology used in the embodiments of the present disclosure is for the purpose of only describing particular embodiments and is not intended to limit the embodiments of the present disclosure. The singular forms "a", "said" and "the" as used in the embodiments and the appended claims of the present disclosure are intended to include the plural form as well, unless the context clearly dictates otherwise. It is also appreciated that the term "and/or" as used herein refers to and includes any and all possible combinations of one or more of the associated listed items.

It should be appreciated that although such terms as first, second and third may be used in the embodiments of the present disclosure to describe various information, the information should not be limited to these terms. These terms are only used to distinguish information of the same type from each other. For example, without departing from the scope of the embodiments of the present disclosure, first information may also be referred to as second information, and similarly, second information may also be referred to as first information. Depending on the context, for example, the word "if" as used herein may be interpreted as "when", or "in a case where", or "in response to determining".

A 5G system may adopt a general quality of service (QoS) mechanism to handle various data services including XR services. The 5G QoS mechanism supports a priority level, the priority level is used to indicate a priority in allocating resources among QoS flows.

**In** addition, 5G research introduces a QoS processing scenario and mechanism of a packet data unit set (PDU set), and also introduces PDU set importance, which is used to indicate the importance of the PDU set.

Currently, the 5G system includes two types of parameters, namely, priority level and PDU set importance. For a specific service, such as resource scheduling and allocation of a data flow or a data packet of an XR service. Since the priority level is used for the entire QoS flow, the PDU set importance is used for the PDU set.

The present disclosure provides a data processing method, a device and a storage medium, which may unify a data discarding priority mechanism for different scenarios or service requirements, and the priority mechanism for cross data flows and inter data flow can match specific requirements for coordinated scheduling. For a specific scenario or a specific service, especially an XR service, a data transmission quality of service (QoS) and a user experience quality may be well supported and guaranteed, and a resource priority scheduling mechanism for a QoS flow and a data packet is improved. The service scenarios may be better matched and the data transmission QoS of the service may be ensured.

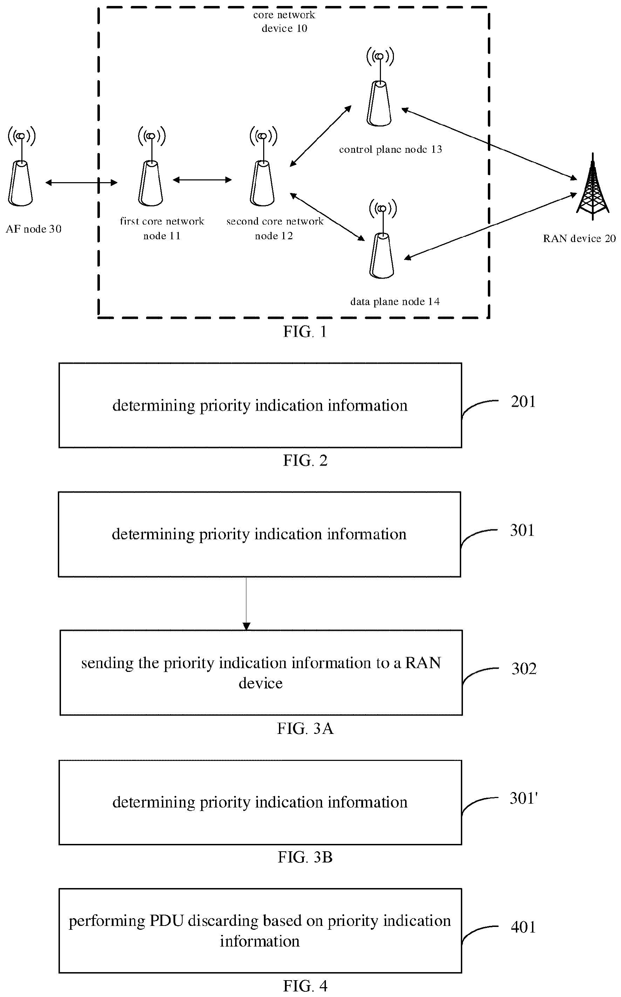

As shown in FIG. 1, FIG. 1 is a schematic diagram of a network architecture applicable to the solution of the present disclosure. The network in the present disclosure may be a 4G network, a 5G network, a 6G network or a future communication network, etc., which is not limited in the present disclosure. The network architecture includes: a first core network node 11, a second core network node 12, a control plane node 13, a data plane node 14, and a radio access network (RAN) device 20.

The first core network node 11 may be a policy control function (PCF) node. The PCF node may use a unified policy framework to manage network behavior and coordinate user information in a unified data repository (UDR) to execute relevant policies.

The second core network node 12 may be a session management function (SMF) node, and the SMF may perform session management, such as session establishment, session modification, and session release, etc.

The control plane node 13 may be an access and mobility management function (AMF) node, the AMF may manage a 5G radio access request, perform registration management, connection management, reachability management, etc.

The data plane node 14 may be a user plane function (UPF) node, and the UPF may be responsible for routing and forwarding related functions of user plane data packets of the 5G core network.

The RAN device 20 may include, but is not limited to, a next generation radio access network (NG-RAN) node.

The first core network node 11, the second core network node 12, the control plane node 13, and the data plane node 14 are all functional nodes on the core network side. Accordingly, the core network device 10 may include the first core network node 11, the second core network node 12, the control plane node 13, and the data plane node 14 in the present disclosure.

The core network device 10 may be an independently deployed device or a device group composed of a plurality of devices. Of course, FIG. 1 is for illustrative purposes only. In actual applications, the core network device 10 also includes other functional nodes, which are not listed one by one herein.

FIG. 1 also provides an AF node 30. It should be noted that the AF node 30 does not belong to the core network node. The AF node 30 may be a functional node deployed by an operator to provide application services, or a functional node from a third party to provide application services, which is not limited in the present disclosure. The AF node 30 is generally deployed independently from the core network device 10.

In an embodiment of the present disclosure, the AF node 30 may send priority indication information to the first core network node 11 included in the core network device 10.

In an embodiment of the present disclosure, the first core network node 11 may determine the priority indication information based on information provided by the AF node 30 and/or local configuration information, and send the priority indication information to the second core network node 12. The second core network node 12 may send the priority indication information to the RAN device 20 through the control plane node 13 or the data plane node 14. The RAN device 20 may perform data processing according to the priority indication information, such as performing packet data unit (PDU) discarding. The priority indication information is used to indicate priority levels of a plurality of types of parameters for PDU discarding.

It should further be noted that the node in the present disclosure may be a physical node, for example, a physical device is used as the node in the present disclosure, or the node in the present disclosure may also be a virtual node deployed on a certain device, which is not limited in the present disclosure.

In the above embodiment, in a case the network includes a plurality of types of parameters, the priority indication information indicates the priority levels of the plurality of types of parameters for the PDU discarding. The first core network node sends the priority indication information to the RAN device. The RAN device may execute the PDU discarding accordingly based on the priority indication information. A resource priority scheduling mechanism for a QoS flow and a data packet is improved. The service scenarios may be better matched and the data transmission QoS of the service may be ensured.

A data processing method provided by the present disclosure is first introduced from the first core network node side.

The present disclosure provides a data processing method. As shown in FIG. 2, FIG. 2 is a flow chart illustrating a data processing method according to an embodiment. The method may be performed by a first core network node, and the first core network node may include, but is not limited to, a PCF node. The method may include the following steps.

At step 201, priority indication information is determined.

In an embodiment of the present disclosure, the priority indication information is used to indicate priority levels of a plurality of types of parameters for packet data unit (PDU) discarding.

In a possible implementation, the plurality of types of parameters may include, but are not limited to, optional parameters for performing data processing in a 5G system.

In an example, the plurality of types of parameters may at least include a quality of service (QoS) priority parameter or a PDU set importance parameter.

In a possible implementation, the priority indication information is used to indicate the priority levels of the plurality of types of parameters for PDU discarding in a network congestion scenario.

It is understandable that, considering that different operators may have different conditions for the network congestion scenario, the priority indication information may not be limited to the network congestion scenario. That is, in a non-congested scenario, the first core network node may also determine the priority indication information and send the priority indication information to an RAN device, and the RAN device performs the PDU discarding based on the priority indication information.

It may also be understood that the indication information in the present disclosure is referred to as "priority indication information", and the core network node provides indication information with other names to the RAN device, such that the RAN device may perform data processing. For example, the PDU discarding solution should fall within the scope of protection of the present disclosure.

In a possible implementation, the priority indication information may be used to indicate at least one of: a first priority order of the plurality of types of parameters for the PDU discarding; second priority orders of the plurality of types of parameters for the PDU discarding in different conditions; a third priority order of part of parameter values comprised in one type of parameter over other types of parameters for the PDU discarding; or each type of parameter being applied to cross-flow or inner-flow PDU discarding independently.

In the present disclosure, the priority indication information may be used to indicate a plurality of types of priority orders, and/or the priority indication information may be used to indicate each type of parameter being applied to cross-flow or inner-flow PDU discarding independently. The first core network node may configure corresponding priority indication information for different services. The configuration manner is flexible and has high availability.

In an example, in a case where the plurality of types of parameters at least include the QoS priority parameter and the PDU set importance parameter, the priority indication information may be used to indicate the first priority order of the QoS priority parameter and the PDU set importance parameter for the PDU discarding.

In the present disclosure the plurality of types of parameters include, but are not limited to, at least one of the QoS priority parameter or the PDU set importance parameter. The priority indication information may indicate the priority levels of the QoS priority parameter and the PDU set importance parameter. Thus, a resource priority scheduling mechanism for a QoS flow and a data packet is improved. The service scenarios may be better matched and the data transmission QoS of the service may be ensured.

Illustratively, the first priority order may be that a priority level of the QoS priority parameter is higher than a priority level of the PDU set importance parameter for the PDU discarding.

That is, in a case of performing the PDU discarding, the RAN device prioritizes performing the PDU discarding based on the QoS priority parameter. After performing the PDU discarding according to the QoS priority parameter, if a stop discarding condition for stopping discarding the PDU is still not fulfilled, the RAN device may perform the PDU discarding based on the PDU set importance parameter.

The stop discarding condition may include, but is not limited to, at least one of the following conditions that: the RAN locally decides to stop discarding the PDU; a network congestion level drops to a predetermined level for stopping discarding the PDU; continuing to perform the PDU discarding may cause a service to be unable to proceed.

The RAN device may stop performing the PDU discarding as long as at least one of the stop discarding conditions is fulfilled in a process of performing the PDU discarding.

Illustratively, the first priority order may be that a priority level of the PDU set importance parameter is higher than a priority level of the QoS priority parameter for the PDU discarding.

That is, in a case of performing the PDU discarding, the RAN device prioritizes performing the PDU discarding based on the PDU set importance parameter. After performing the PDU discarding according to the PDU set importance parameter, if the stop discarding condition for stopping discarding the PDU is still not fulfilled, the RAN device may perform the PDU discarding based on the QoS priority parameter.

The stop discarding condition may include, but is not limited to, at least one of the following conditions that: the RAN locally decides to stop discarding the PDU; the network congestion level drops to the predetermined level for stopping discarding the PDU; continuing to perform the PDU discarding may cause the service to be unable to proceed.

The RAN device may stop performing the PDU discarding as long as at least one of the stop discarding conditions is fulfilled in a process of performing the PDU discarding.

In an example, in a case where the plurality of types of parameters at least include the QoS priority parameter and the PDU set importance parameter, the priority indication information may be used to indicate the second priority orders of the QoS priority parameter and the PDU set importance parameter for the PDU discarding in different conditions.

Illustratively, the conditions herein may include, but are not limited to, network conditions, for example, the network conditions may be used to indicate that the network congestion level is high, medium, or low, etc. Illustratively, in different conditions, the second priority orders may be the same, partially the same, or completely different, which will not be limited in the disclosure.

Illustratively, in a case where the network congestion level is low, the second priority order may be that a priority level of the PDU set importance parameter is higher than a priority level of the QoS priority parameter for the PDU discarding. In a case where the network congestion level is medium or high, the second priority order may be that the priority level of the QoS priority parameter is higher than the priority level of the PDU set importance parameter for the PDU discarding.

For example, in a case where the network congestion level is low, the RAN device prioritizes performing the PDU discarding based on the PDU set importance parameter during performing the PDU discarding. After performing the PDU discarding according to the PDU set importance parameter, if the stop discarding condition for stopping discarding the PDU is still not fulfilled, the RAN device may perform the PDU discarding based on the QoS priority parameter.

Furthermore, if the network congestion level increases after performing the PDU discarding in the above manner, for example, the network congestion level increases to medium or high, the RAN device switches to prioritize performing the PDU discarding based on the QoS priority parameter. After performing the PDU discarding based on the QoS priority parameter, if the stop discarding condition for stopping discarding the PDU is still not fulfilled, the RAN device may perform the PDU discarding based on the PDU set importance parameter.

It should be noted that the above condition is only an example, and the solutions that the priority indication information is used to indicate different second priority orders of the plurality of types of parameters for PDU discarding in different conditions should all fall within the scope of protection of the present disclosure.

In an example, in a case where the plurality of types of parameters at least include the QoS priority parameter and the PDU set importance parameter, the priority indication information may be used to indicate the third priority order of part of parameter values included in one type of parameter in the QoS priority parameter and the PDU set importance parameter over the other type of parameter for the PDU discarding.

Illustratively, the third priority order may be that a priority level of part of optional QoS priority parameter values included in the QoS priority parameter is higher than a priority level of the PDU set importance parameter for the PDU discarding.

Or, the third priority order may be that a priority level of part of optional importance parameter values included in the QoS priority parameter is higher than a priority level of the QoS priority parameter for the PDU discarding.

For example, the QoS priority parameter includes 6 optional QoS priority parameter values, namely level#1 to level#6. The third priority order may be that a priority level of level#5 to level#6 is higher than the priority level of the PDU set importance parameter for the PDU discarding.

That is, in a case of performing the PDU discarding, the RAN device may prioritize discarding PDUs corresponding to QoS priority parameter values level#6 and level#5. If the stop discarding condition for stopping discarding PDUs is still not fulfilled after discarding the above PDUs, the RAN device may perform the PDU discarding based on the PDU set importance parameter. If the stop discarding condition for stopping discarding PDUs is still not fulfilled after performing the PDU discarding based on the PDU set importance parameter, the RAN device may continue to discard PDUs corresponding to QoS priority parameter values level#4, level#3, etc.

For another example, the PDU set importance parameter includes four optional importance parameter values, namely, 1 to 4 respectively, and the third priority order may be that a priority level of the optional importance parameter value 4 is higher than the priority level of the QoS priority parameter for the PDU discarding.

That is, in a case of performing the PDU discarding, the RAN device may prioritize discarding a PDU set corresponding to the importance parameter value 4. If the stop discarding condition is still not fulfilled after discarding the above PDU, the RAN device may perform the PDU discarding based on the QoS priority parameter. If the stop discarding condition is still not fulfilled after performing the PDU discarding based on the QoS priority parameter, the RAN device may continue to discard PDU sets corresponding to other importance parameter values.

The stop discarding condition may include, but is not limited to, at least one of the following conditions that: the RAN locally decides to stop discarding the PDU; the network congestion level drops to the predetermined level for stopping discarding the PDU; continuing to perform the PDU discarding may cause the service to be unable to proceed.

The RAN device may stop performing the PDU discarding as long as at least one of the stop discarding conditions is fulfilled in a process of performing the PDU discarding.

In an example, in a case where the plurality of types of parameters at least include the QoS priority parameter and the PDU set importance parameter, the priority indication information is used to indicate that each type of parameter is applied to cross-flow or inner-flow PDU discarding independently, the QoS priority parameter may be used for cross-flow PDU discarding, and the PDU set importance parameter may be used for inner-flow PDU discarding.

Illustratively, in response to performing the cross-flow PDU discarding, the RAN device may determine a QoS flow to be discarded based on the QoS priority parameter, and discard a PDU and/or a PDU set included in a corresponding QoS flow according to an ascending order of QoS priority levels.

The present disclosure does not limit a correlation between the size of the QoS priority parameter value and the priority level, that is, the greater QoS priority parameter value may correspond to the lower QoS priority level, or the less QoS priority parameter value may correspond to the lower QoS priority level.

Illustratively, in response to performing the inner-flow PDU discarding, the RAN device may determine a PDU set to be discarded based on the PDU set importance parameter, and discarding a corresponding PDU set according to an ascending order of PDU set importance levels.

The present disclosure does not limit a correlation between the value of the PDU set importance parameter and the importance level, that is, the minimum the PDU set importance parameter value may correspond to the highest the PDU set importance level, or the maximum the PDU set importance parameter value may correspond to the highest the PDU set importance level.

For example, in a case where the minimum PDU set importance parameter value may correspond to the highest importance level, the RAN device may prioritize discarding the PDU set with the maximum importance parameter value.

Assumed that the PDU set importance parameter value being 1 indicates that the PDU set has the highest importance level, and a greater value indicates that the PDU set has a lower importance level, then when performing the inner-flow PDU discarding, the RAN device may prioritize discarding the PDU set with the maximum importance parameter value.

That is, the RAN device discards the corresponding PDU set in an order of the PDU set importance parameter values N, N-1, N-2, etc., where N is a positive integer greater than 1.

For another example, in a case where the maximum PDU set importance parameter value corresponds to the highest importance level, the RAN device may prioritize discarding the PDU set with the minimum importance parameter value.

Assumed that the PDU set importance parameter value being 1 indicates that the PDU set has the lowest importance level, and a greater value indicates that the PDU set has a higher importance, then when performing the inner-flow PDU discarding, the RAN device may prioritize discarding the PDU set with the minimum importance parameter value.

That is, the RAN device discards the corresponding PDU set in an order of the PDU set importance parameter values 1, 2, ..., N.

In the present disclosure, in a case where the priority indication information is used to indicate that each type of parameter is applied to cross-flow or inner-flow PDU discarding independently, the priority indication information may further indicate: in response to performing the cross-flow PDU discarding, determining a QoS flow to be discarded based on the QoS priority parameter, and discarding a corresponding QoS flow according to an ascending order of QoS priority levels; and in response to performing the inner-flow PDU discarding, determining a PDU set to be discarded based on the PDU set importance parameter, and discarding a corresponding PDU set according to an ascending order of PDU set importance levels. The solution in which the priority indication information is used to indicate that each type of parameter is applied to cross - flow or inner-flow PDU discarding independently is further explained, which may have high availability.

In a possible implementation, the first core network node may receive the priority indication information provided by an AF. The AF may determine the priority indication information according to an operator policy recorded by itself and a service requirement corresponding to the application.

In a case where the AF is deployed by an operator and the first core network node may be a PCF, the AF may directly provide the priority indication information to the PCF.

In a case where the AF is deployed by a third party, the AF may first send the priority indication information to a network exposure function (NEF) node, and the NEF may forward the priority indication information to the PCF. For example, regarding a video call application, the AF may determine that the priority indication information is the first priority order, such as the priority level of the QoS priority parameter is higher than the priority level of the PDU set importance parameter. In case of the network congestion, the RAN device may first discard a PDU and a PDU set corresponding to a video flow, to ensure a normal transmission of a voice flow.

For another example, regarding a gaming application, the AF may determine that the priority indication information is the third priority order. For example, a priority level of part of parameter values included in the PDU set importance parameter is higher than the priority level of the QoS priority parameter for the PDU discarding. In case of the network congestion, the RAN device may first discard part of PDU sets in a certain service flow of a game, but try to ensure normal transmission of different service flows of the game.

In another possible implementation, the priority indication information is determined based on local configuration information of the first core network node.

For example, the first core network node determines the specific content of the priority indication information according to the local configuration information, user subscription information, operator policy, etc.

In another possible implementation, the first core network node receives the priority indication information provided by the AF, and the first core network node may also be deployed with the local configuration information that may be used to determine the priority indication information. The first core network node may determine the content of the priority indication information sent to the RAN device based on the content of the priority indication information provided by the AF.

In the present disclosure, the first core network node may determine the priority indication information based on the information provided by the AF and/or the local configuration information of the first core network node. Thus, flexibility of determining the priority indication information may be improved, the service scenarios may be better matched and the data transmission QoS of the service may be ensured.

In another possible implementation, the first core network node receives the priority indication information provided by the AF, and local configuration information that can be used to determine the priority indication information is also deployed on the first core network node. The first core network node can comprehensively consider the content of the priority indication information provided by the AF and the local configuration information, and jointly determine the content of the priority indication information sent to the RAN device.

In a possible implementation, the first core network node receives the priority indication information provided by the AF, and the priority indication information may be provided to the first core network node by the AF in an explicit manner.

In a possible implementation, in a case where the first core network node does not receive the priority indication information provided by the AF, the first core network node may determine the content of the priority indication information to be sent to the RAN device according to the local configuration information.

In another possible implementation, in a case where the first core network node does not receive the priority indication information provided by the AF, the first core network node may consider that the AF implicitly indicates the content of the priority indication information, and the first core network node may determine that the priority indication information is used to indicate that each type of parameter is applied to cross-flow or inner-flow PDU discarding independently.

Certainly, the first core network node may also determine, based on a protocol agreement, that the priority indication information indicates other content in a case of receiving no priority indication information provided by the AF, which is not limited in the present disclosure.

In the absence of contradiction, the steps in this implementation or embodiment and their optional examples may be arbitrarily combined and their order may be arbitrarily exchanged, and this implementation or embodiment and their optional examples may be arbitrarily combined with other implementations or embodiments and their optional examples.

In the above embodiment, in a case the network includes the plurality of types of parameters, the priority levels of the plurality of types of parameters for the PDU discarding are determined based on the priority indication information. A resource priority scheduling mechanism for a QoS flow and a data packet is improved. The service scenarios may be better matched and the data transmission QoS of the service may be ensured.

In some optional embodiments, referring to FIG. 3A, FIG. 3A is a flow chart of a data processing method according to an embodiment. The method may be performed by a first core network node, and the first core network node may include, but is not limited to, a PCF node. The method may include the following steps.

At step 301, priority indication information is determined.

The implementation of step 301 is similar to the implementation of the above step 201, which will not be repeated herein.

At step 302, the priority indication information is sent to a RAN device.

In a possible implementation, the first core network node may send the priority indication information to the second core network node, and the second core network node forwards the priority indication information to the RAN device. Optionally, the second core network node may be an SMF node.

In an example, the first core network node may send policy control and charging (PCC) rule information to the second core network node. The PCC rule information includes the priority indication information.

That is, the first core network node may send the priority indication information as a part of the PCC rule to the second core network node.

Further, after receiving the priority indication information, the second core network node may send the priority indication information to the RAN device in the following manner.

In a first manner, the priority indication information is sent to the RAN device through a control plane node.

Illustratively, the control plane node may be an AMF node.

Accordingly, the second core network node may send the priority indication information as part of a QoS profile to the RAN device. That is, the second core network node may send the QoS profile to the RAN device through the control plane node, and the QoS profile includes the priority indication information.

In a second manner, the priority indication information is sent to the RAN device through a data plane node.

Illustratively, the data plane node may be a UPF node.

Correspondingly, the second core network node may send the PDU to the RAN device through the data plane node. A message header of a user plane message (user plane part of GTP, GTP-U) of the PDU includes the priority indication information.

In an embodiment of the present disclosure, the priority indication information may be sent to the RAN device in an explicit manner.

Specifically, the first core network node may send the priority indication information to the second core network node, and the second core network node may send the priority indication information to the RAN device through the control plane node or the data plane node. The specific sending method has been introduced in the above embodiment and will not be repeated here.

In the present disclosure, the first core network node may first send the priority indication information to the second core network node, such that the second core network node sends the priority indication information to the RAN device through the control plane node or the data plane node. The purpose of providing the priority indication information to the RAN device is achieved, and availability is high.

In the absence of contradiction, the steps in this implementation or embodiment and their optional examples may be arbitrarily combined and their order may be arbitrarily exchanged, and this implementation or embodiment and their optional examples may be arbitrarily combined with other implementations or embodiments and their optional examples.

In the above embodiment, in some optional embodiments, referring to FIG. 3B, FIG. 3B is a flow chart of a data processing method according to an embodiment. The method may be performed by a first core network node. The first core network node may include, but is not limited to, a PCF node. The method may include the following steps.

At step 301', priority indication information is determined.

The implementation of step 301' is similar to the implementation of the above step 201, which will not be repeated herein.

In a possible implementation, the priority indication information may be indicated to the RAN device in an implicit manner.

In an example, a correspondence between information content of the priority indication information and information content of other associated information may be agreed in a protocol. The associated information herein may be the information that the first core network node needs to send to the RAN device according to the protocol. The RAN device does not need to receive the priority indication information separately, and may determine the information content of the priority indication information based on the above correspondence and the information content of the associated information from the first core network node.

In another example, the first core network node may send no priority indication information to the RAN device in response to determining that the priority indication information is used to indicate that each type of parameter is applied to cross-flow or inner-flow PDU discarding independently.

In a case where the RAN device receives no priority indication information from the first core network node, the RAN device determines that the priority indication information is used to indicate that each type of parameter is applied to cross-flow or inner-flow PDU discarding independently.

The above is only an illustrative description, and solutions in which the first core network node uses other methods to inform the RAN device of the priority indication information should fall within the scope of protection of the present disclosure.

In the absence of contradiction, the steps in this implementation or embodiment and their optional examples may be arbitrarily combined and their order may be arbitrarily exchanged, and this implementation or embodiment and their optional examples may be arbitrarily combined with other implementations or embodiments and their optional examples.

In the above embodiment, in some optional embodiments, the above step 201 may specifically include:
determining the priority indication information, and the priority indication information may used to indicate that each type of parameter is applied to cross-flow or inner-flow PDU discarding independently.

In an embodiment of the present disclosure, the priority indication information is used to indicate the priority levels of the plurality of types of parameters for PDU discarding.

In a possible implementation, the plurality of types of parameters may include, but are not limited to, parameters for performing data processing in a 5G system.

In an example, the plurality of types of parameters may at least include a QoS priority parameter or a PDU set importance parameter.

In a possible implementation, the priority indication information is used to indicate the priority levels of the plurality of types of parameters for PDU discarding in a network congestion scenario.

It is understandable that, considering that different operators may have different conditions for the network congestion scenario, the priority indication information may not be limited to the network congestion scenario. That is, in a non-congested scenario, the first core network node may also determine the priority indication information and send the priority indication information to an RAN device, and the RAN device performs the PDU discarding based on the priority indication information.

In a possible implementation, the priority indication information is used to indicate that each type of parameter is applied to cross-flow or inner-flow PDU discarding independently.

In an embodiment of the present disclosure, the priority indication information is used to indicate that the QoS priority parameter is used for cross-flow PDU discarding, and the PDU set importance parameter is used for inner-flow PDU discarding.

Illustratively, in response to performing the cross-flow PDU discarding, the RAN device may determine a QoS flow to be discarded based on the QoS priority parameter, and discard a PDU and/or a PDU set included in a corresponding QoS flow according to an ascending order of QoS priority levels.

The present disclosure does not limit a correlation between the size of the QoS priority parameter value and the priority level, that is, the greater QoS priority parameter value may correspond to the lower QoS priority level, or the less QoS priority parameter value may correspond to the lower QoS priority level. Illustratively, in response to performing the inner-flow PDU discarding, the RAN device may determine a PDU set to be discarded based on the PDU set importance parameter, and discarding a corresponding PDU set according to an ascending order of PDU set importance levels.

The present disclosure does not limit a correlation between the value of the PDU set importance parameter and the importance level, that is, the minimum the PDU set importance parameter value may correspond to the highest the PDU set importance level, or the maximum the PDU set importance parameter value may correspond to the highest the PDU set importance level.

In a possible implementation, the first core network node may receive the priority indication information provided by an AF. The AF may determine the priority indication information according to an operator policy recorded by itself and a service requirement corresponding to the application.

In another possible implementation, the priority indication information is determined based on local configuration information of the first core network node.

In a possible implementation, the first core network node receives the priority indication information provided by the AF, and the priority indication information may be provided to the first core network node by the AF in an explicit manner.

In another possible implementation, in a case where the first core network node does not receive the priority indication information provided by the AF, the first core network node may consider that the AF implicitly indicates the content of the priority indication information, and the first core network node may determine that the priority indication information is used to indicate that each type of parameter is applied to cross-flow or inner-flow PDU discarding independently.

After the first core network node determines that the priority indication information is used to indicate that each type of parameter is applied to cross-flow or inner-flow PDU discarding independently, the first core network node may not provide the priority indication information to the second core network node. Accordingly, the RAN device may not receive the priority indication information. The RAN device determines that the priority indication information is used to indicate that each type of parameter is applied to cross-flow or inner-flow PDU discarding independently.

In the absence of contradiction, the steps in this implementation or embodiment and their optional examples may be arbitrarily combined and their order may be arbitrarily exchanged, and this implementation or embodiment and their optional examples may be arbitrarily combined with other implementations or embodiments and their optional examples.

In the above embodiment, the first core network node may implicitly inform the RAN device of the priority indication information, and the priority indication information is used to indicate that each type of parameter is applied to cross-flow or inner-flow PDU discarding independently. On the basis of the priority indication information, The RAN device may determine the QoS flow to be discarded based on the QoS priority parameter in a case of performing the cross-flow PDU discarding, and may determine the PDU set to be discarded based on the PDU set importance parameter in a case of performing the inner-flow PDU discarding. A resource priority scheduling mechanism for a QoS flow and a data packet is improved. The service scenarios may be better matched and the data transmission QoS of the service may be ensured. The following introduces the data processing method provided by the present disclosure from the RAN device side.

The present disclosure provides a data processing method. As shown in FIG. 4, FIG. 4is a flow chart of a data processing method according to an embodiment. The method may be performed by a RAN device. The RAN device may include, but is not limited to, an NG-RAN device. The method may include the following steps
At step 401, PDU discarding is performed based on priority indication information.

In an embodiment of the present disclosure, the priority indication information is used to indicate priority levels of a plurality of types of parameters for packet data unit (PDU) discarding.

In a possible implementation, the plurality of types of parameters may include, but are not limited to, parameters for performing data processing in a 5G system.

In an example, the plurality of types of parameters may at least include a QoS priority parameter or a PDU set importance parameter.

In a possible implementation, the priority indication information is used to indicate the priority levels of the plurality of types of parameters for PDU discarding in a network congestion scenario.

It is understandable that, considering that different operators may have different conditions for the network congestion scenario, the priority indication information may not be limited to the network congestion scenario. That is, in a non-congested scenario, the first core network node may also determine the priority indication information and send the priority indication information to an RAN device, and the RAN device performs the PDU discarding based on the priority indication information.

It may also be understood that the indication information in the present disclosure is referred to as "priority indication information", and the core network node provides indication information with other names to the RAN device, such that the RAN device may perform data processing. For example, the PDU discarding solution should fall within the scope of protection of the present disclosure.

In a possible implementation, the priority indication information may be used to indicate at least one of: a first priority order of the plurality of types of parameters for the PDU discarding; second priority orders of the plurality of types of parameters for the PDU discarding in different conditions; a third priority order of part of parameter values compris ed in one type of parameter over other types of parameters for the PDU discarding; or each type of parameter being applied to cross-flow or inner-flow PDU discarding independently.

In an example, in a case where the plurality of types of parameters at least include the QoS priority parameter and the PDU set importance parameter, the priority indication information may be used to indicate the first priority order of the QoS priority parameter and the PDU set importance parameter for the PDU discarding.

Correspondingly, the RAN device may determine a first-type parameter sequentially according to the first priority order, and every determine one first-type parameter, among a plurality of parameter values included in the first-type parameter, discard a PDU corresponding to each of the parameter values sequentially according to a specified order of the parameter values.

Illustratively, the first priority order may be that a priority level of the QoS priority parameter is higher than a priority level of the PDU set importance parameter for the PDU discarding.

Accordingly, in a case where the RAN device performs the PDU discarding, the QoS priority parameter is prioritized as the first-type parameter, and further, among the plurality of parameter values included in the determined QoS priority parameter, the PDU corresponding to each of the parameter values is discarded sequentially according to the specified order of the parameter values. At this case, the QoS priority parameter may include a plurality of optional QoS priority parameter values, and the RAN device may discard the PDU corresponding to each of the parameter values sequentially according to the specified order of the parameter values, such as an order of the optional QoS priority parameter values from high to low or from low to high.

It should be noted that the RAN device prioritizes discarding a PDU with a low QoS priority level.

Every performing the PDU discarding according to the QoS priority parameter, it may be determined whether a stop discarding condition for stopping discarding the PDU is fulfilled. If the stop discarding condition is fulfilled, the RAN device may stop discarding PDU. If the stop discarding condition is not fulfilled, the RAN device may determine the PDU set importance parameter as the first-type parameter to perform the PDU discarding.

Specifically, among the plurality of parameter values included in the determined PDU set importance parameter, the PDU corresponding to each of the parameter values is discarded sequentially according to the specified order of the parameter values. At this time, the PDU set importance parameter may include a plurality of optional PDU set importance parameter values, and the RAN device may discard the PDU corresponding to each of the parameter values sequentially according to the specified order of the parameter values, such as the order of the PDU set importance parameter values from high to low or from low to high.

It should be noted that the RAN device prioritizes discarding a PDU set with a low importance level.

The stop discarding condition may include, but is not limited to, at least one of the following conditions that: the RAN locally decides to stop discarding the PDU; a network congestion level drops to a predetermined level for stopping discarding the PDU; continuing to perform the PDU discarding may cause a service to be unable to proceed.

The RAN device may stop performing the PDU discarding as long as at least one of the stop discarding conditions is fulfilled in a process of performing the PDU discarding.

Illustratively, the first priority order may be that a priority level of the PDU set importance parameter is higher than a priority level of the QoS priority parameter for the PDU discarding.

Accordingly, in a case where the RAN device performs the PDU discarding, the PDU set importance parameter is prioritized as the first-type parameter, and further, among the plurality of parameter values included in the determined PDU set importance parameter, the PDU set corresponding to each of the parameter values is discarded sequentially according to the specified order of the parameter values. At this case, the QoS priority parameter may include a plurality of optional PDU set importance parameter values, and the RAN device may discard the PDU set corresponding to each of the parameter values sequentially according to the specified order of the parameter values, such as an order of the optional PDU set importance parameter values from high to low or from low to high.

It should be noted that the RAN device prioritizes discarding a PDU set with a low importance level.

Every performing the PDU discarding according to the PDU set importance parameter, it may be determined whether a stop discarding condition for stopping discarding the PDU is fulfilled. If the stop discarding condition is fulfilled, the RAN device may stop discarding PDU. If the stop discarding condition is not fulfilled, the RAN device may determine the QoS priority parameter as the first-type parameter to perform the PDU discarding.

Specifically, among the plurality of parameter values included in the determined PDU set importance parameter, the PDU corresponding to each of the parameter values is discarded sequentially according to the specified order of the parameter values. At this time, the QoS priority parameter may include a plurality of optional QoS priority parameter values, and the RAN device may discard the PDU corresponding to each of the parameter values sequentially according to the specified order of the parameter values, such as the order of the QoS priority parameter values from high to low or from low to high.

It should be noted that the RAN device prioritizes discarding a PDU with a low QoS priority level. The stop discarding condition may include, but is not limited to, at least one of the following conditions that: the RAN locally decides to stop discarding the PDU; a network congestion level drops to a predetermined level for stopping discarding the PDU; continuing to perform the PDU discarding may cause a service to be unable to proceed.

The RAN device may stop performing the PDU discarding as long as at least one of the stop discarding conditions is fulfilled in a process of performing the PDU discarding.

In an example, in a case where the plurality of types of parameters at least include the QoS priority parameter and the PDU set importance parameter, the priority indication information may be used to indicate the second priority orders of the QoS priority parameter and the PDU set importance parameter for the PDU discarding in different conditions.

Illustratively, in different conditions, the second priority orders may be the same, partially the same, or completely different, which will not be limited in the disclosure.

Correspondingly, the RAN device may determine a first-type parameter sequentially according to the second priority orders of the plurality of types of parameters in a first condition; and every determine one first-type parameter, among a plurality of parameter values comprised in the first-type parameter, discard a PDU corresponding to each of the parameter values sequentially according to a specified order of the parameter values
Illustratively, the conditions herein may include, but are not limited to, network conditions, for example, the network conditions may be used to indicate that the network congestion level is high, medium, or low, etc.

Illustratively, in a case where the network congestion level is low, the second priority order may be that a priority level of the PDU set importance parameter is higher than a priority level of the QoS priority parameter for the PDU discarding. In a case where the network congestion level is medium or high, the second priority order may be that the priority level of the QoS priority parameter is higher than the priority level of the PDU set importance parameter for the PDU discarding.

For example, in a case where the network congestion level is low, the RAN device prioritizes performing the PDU discarding based on the PDU set importance parameter during performing the PDU discarding. After performing the PDU discarding according to the PDU set importance parameter, if the stop discarding condition for stopping discarding the PDU is still not fulfilled, the RAN device may perform the PDU discarding based on the QoS priority parameter. The implementation of discarding the PDU is similar to the process of the RAN device specifying the PDU discarding in the first priority order, and will not be repeated here.

Furthermore, if the network congestion level increases after performing the PDU discarding in the above manner, for example, the network congestion level increases to medium or high, the RAN device switches to prioritize performing the PDU discarding based on the QoS priority parameter. After performing the PDU discarding based on the QoS priority parameter, if the stop discarding condition for stopping discarding the PDU is still not fulfilled, the RAN device may perform the PDU discarding based on the PDU set importance parameter. The implementation of discarding the PDU is similar to the process of the RAN device specifying the PDU discarding in the first priority order, and will not be repeated here.

It should be noted that the above condition is only an example, and the solutions that the priority indication information is used to indicate different second priority orders of the plurality of types of parameters for PDU discarding in different conditions should all fall within the scope of protection of the present disclosure.

In an example, in a case where the plurality of types of parameters at least include the QoS priority parameter and the PDU set importance parameter, the priority indication information may be used to indicate the third priority order of part of parameter values included in one type of parameter in the QoS priority parameter and the PDU set importance parameter over the other type of parameter for the PDU discarding.

Correspondingly, the RAN device may determine first parameter values sequentially according to the third priority order, and discard a PDU corresponding to each of the first parameter values sequentially.

Illustratively, the third priority order may be that a priority level of part of optional QoS priority parameter values included in the QoS priority parameter is higher than a priority level of the PDU set importance parameter for the PDU discarding.

Or, the third priority order may be that a priority level of part of optional importance parameter values included in the QoS priority parameter is higher than a priority level of the QoS priority parameter for the PDU discarding.

For example, the QoS priority parameter includes 6 optional QoS priority parameter values, namely level#1 to level#6. The third priority order may be that a priority level of level#5 to level#6 is higher than the priority level of the PDU set importance parameter for the PDU discarding.

That is, in a case where the RAN device performs the PDU discarding, level#6 and level#5 may be determined as the first parameter values sequentially, thus, the RAN device may prioritize discarding PDUs corresponding to the QoS priority parameter values level#6 and level#5. After discarding the above PDUs, if the stop discarding condition for stopping discarding the PDU is still not fulfilled, the RAN device may determine the parameter values included in the PDU set importance parameter as the first parameter values sequentially, and discard PDUs corresponding to the first parameter values. After performing the PDU discarding based on the PDU set importance parameter, if the stop discarding condition for stopping discarding the PDU is still not fulfilled, the RAN device may continue to determine the QoS priority parameter values level#4, level#3, etc. as the first parameter values, and discard the corresponding PDUs.

For another example, the PDU set importance parameter includes four optional importance parameter values, namely, 1 to 4, respectively, and the third priority order may be that a priority level of the optional importance parameter value 4 is higher than the priority level of the QoS priority parameter for the PDU discarding.

That is, in a case where the RAN device performs the PDU discarding, the RAN device may first determine the importance parameter value 4 as the first parameter value, and then discards a PDU set corresponding to the importance parameter value 4. After discarding the above PDU set, if the stop discarding condition is still not fulfilled, the RAN device may determine parameter values included in the QoS priority parameter as the first parameter values and perform the corresponding PDU discarding. After performing the PDU discarding based on the QoS priority parameter, if the stop discarding condition is still not fulfilled, the RAN device may continue to determine other importance parameter values as the first parameter values and discard the corresponding PDU sets.

It should be noted that each time the RAN device performs the PDU discarding, the RAN device prioritizes discarding the PDU with a low QoS priority level or a PDU set with a low importance level.

The stop discarding condition may include, but is not limited to, at least one of the following conditions that: the RAN locally decides to stop discarding the PDU; the network congestion level drops to the predetermined level for stopping discarding the PDU; continuing to perform the PDU discarding may cause the service to be unable to proceed.

The RAN device may stop performing the PDU discarding as long as at least one of the stop discarding conditions is fulfilled in a process of performing the PDU discarding.

In an example, in a case where the plurality of types of parameters at least include the QoS priority parameter and the PDU set importance parameter, the priority indication information is used to indicate that each type of parameter is applied to cross-flow or inner-flow PDU discarding independently, the QoS priority parameter may be used for the cross-flow PDU discarding, and the PDU set importance parameter may be used for the inner-flow PDU discarding.

Illustratively, in response to performing the cross-flow PDU discarding, the RAN device may determine a QoS flow to be discarded based on the QoS priority parameter, and discard a PDU and/or a PDU set included in a corresponding QoS flow according to an ascending order of QoS priority levels.

The present disclosure does not limit a correlation between the size of the QoS priority parameter value and the priority level, that is, the greater QoS priority parameter value may correspond to the lower QoS priority level, or the less QoS priority parameter value may correspond to the lower QoS priority level.

Illustratively, in response to performing the inner-flow PDU discarding, the RAN device may determine a PDU set to be discarded based on the PDU set importance parameter, and discarding a corresponding PDU set according to an ascending order of PDU set importance levels.

The present disclosure does not limit a correlation between the value of the PDU set importance parameter and the importance level, that is, the minimum the PDU set importance parameter value may correspond to the highest the PDU set importance level, or the maximum the PDU set importance parameter value may correspond to the highest the PDU set importance level.

For example, in a case where the minimum PDU set importance parameter value may correspond to the highest importance level, the RAN device may prioritize discarding the PDU set with the maximum importance parameter value.

Assumed that the PDU set importance parameter value being 1 indicates that the PDU set has the highest importance level, and a greater value indicates that the PDU set has a lower importance level, then when performing the inner-flow PDU discarding, the RAN device may prioritize discarding the PDU set with the maximum importance parameter value.

That is, the RAN device discards the corresponding PDU set in an order of the PDU set importance parameter values N, N-1, N-2, etc., where N is a positive integer greater than 1.

For another example, in a case where the maximum PDU set importance parameter value corresponds to the highest importance level, the RAN device may prioritize discarding the PDU set with the minimum importance parameter value.

Assumed that the PDU set importance parameter value being 1 indicates that the PDU set has the lowest importance level, and a greater value indicates that the PDU set has a higher importance, then when performing the inner-flow PDU discarding, the RAN device may prioritize discarding the PDU set with the minimum importance parameter value.

That is, the RAN device discards the corresponding PDU set in an order of the PDU set importance parameter values 1, 2, ..., N.

In a possible implementation, the RAN device may receive the priority indication information sent by the first core network node.

Illustratively, the RAN device receives the priority indication information sent by a second network side node to the RAN device through a control plane node. The priority indication information is sent by the first core network node to the second core network node. The control plane node may be an AMF.

Further, the RAN device may receive a QoS profile sent by the second network side node through the control plane node. The QoS profile may include the priority indication information.

Illustratively, the RAN device receives the priority indication information sent by the second network side node to the RAN device through a data plane node.

Illustratively, the RAN device may receive the priority indication information sent by the second network side node through the data plane node. The priority indication information is sent by the first core network node to the second core network node. The data plane node may be a UPF.

Further, the RAN device may receive a PDU sent by the second network side node through the data plane node. A message header of a user plane message of the PDU may include the priority indication information.

In a possible implementation, the RAN device may receive the priority indication information sent by the first core network node in an explicit manner.

In another possible implementation, in a case where the RAN device receives no priority indication information sent by the first core network node, the RAN device may consider that the first core network node has implicitly informed the priority indication information. Accordingly, the RAN device determines that the priority indication information is used to indicate that each type of parameter is applied to cross-flow or inner-flow PDU discarding independently. Furthermore, the RAN device may perform the PDU discarding based on the priority indication information, and stop performing the PDU discarding in a case where the stop discarding condition is fulfilled. The specific implementation method has been introduced in the above embodiment and will not be repeated here.

In the absence of contradiction, the steps in this implementation or embodiment and their optional examples may be arbitrarily combined and their order may be arbitrarily exchanged, and this implementation or embodiment and their optional examples may be arbitrarily combined with other implementations or embodiments and their optional examples.

In the above embodiment, the RAN device may perform the PDU discarding based on the priority indication information. In a case where the network includes the plurality of types of parameters, the corresponding parameter is quickly selected based on the priority indication information to perform the PDU discarding. A resource priority scheduling mechanism for a QoS flow and a data packet is improved. The service scenarios may be better matched and the data transmission QoS of the service may be ensured.

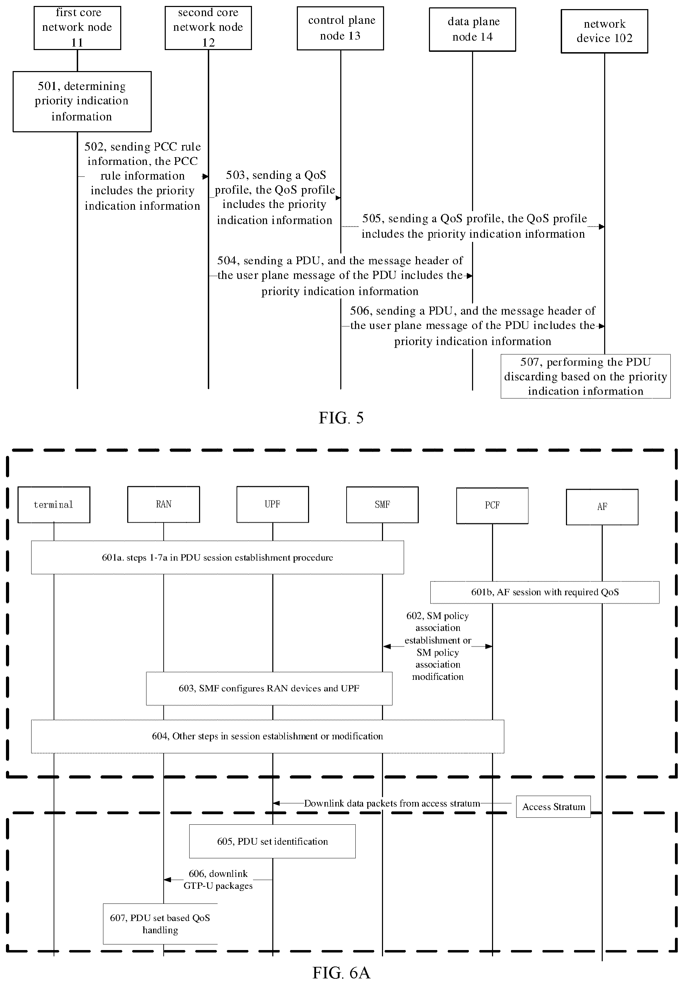

In some optional embodiments, referring to FIG. 5, FIG. 5 is a flow chart of a data processing method according to an embodiment. The method may be applicable for a system architecture shown in FIG. 1 and may include the following steps.

At step 501, a first core network node 11 determines priority indication information.

In an embodiment of the present disclosure, the priority indication information is used to indicate priority levels of a plurality of types of parameters for PDU discarding.

The implementation of step 501 may be similar to the implementation of the above step 201, and will not be repeated here.

For example, the first core network node 11 may determine the priority indication information based on information provided by an AF 30. And/or, the first core network node 11 may determine the priority indication information based on local configuration information.

At step 502, the first core network node 11 sends PCC rule information to a second core network node 12. The PCC rule information includes the priority indication information.

In an embodiment of the disclosure, after obtaining the PCC rule information and parsing the priority indication information therein, the second core network node 12 may process the priority indication information and add the priority indication information to a QoS profile, such that the priority indication information is sent to a control plane node 13 subsequently.

Alternatively, in an embodiment of the present disclosure, after obtaining the PCC rule information and parsing the priority indication information therein, the second core network node 12 may process the priority indication information and add the priority indication information to the PDU, specifically, add the priority indication information to a message header of a user plane message of the PDU, such that the priority indication information is sent to a data plane node 14 subsequently.

At step 503, the second core network node 12 sends the QoS profile to the control plane node 13. The QoS profile includes the priority indication information.

In an embodiment of the present disclosure, after obtaining the QoS profile and parsing the priority indication information therein, the control plane node 13 may process the priority indication information and add the priority indication information to information or signaling to be sent to the RAN device 20, such that the priority indication information is sent to the RAN device 20 subsequently.

At step 504, the second core network node 12 sends a PDU to the data plane node 14, and the message header of the user plane message of the PDU includes the priority indication information.

In an embodiment of the present disclosure, after obtaining the PDU and parsing the priority indication information therein, the data plane node 14 may process the priority indication information and add the priority indication information into data (such as a data packet, a data flow, etc.) to be sent to the RAN device 20, such that the priority indication information is sent to the RAN device 20 subsequently.

The above step 503 and step 504 may be performed either one or both, and the present disclosure does not limit this.

At step 505, the control plane node 13 sends the priority indication information to the RAN device 20.

At step 506, the data plane node 14 sends the priority indication information to the RAN device 20.

If step 503 and step 504 are executed selectively, then step 505 and step 506 may be executed selectively. For example, if step 503 is executed, step 505 may be executed adaptively; if step 504 is executed, step 506 may be executed adaptively.

If both step 503 and step 504 are executed, then both step 505 and step 506 may be executed.

At step 507, the RAN device 20 performs the PDU discarding based on the priority indication information.

The implementation of step 507 is similar to the implementation of step 401 above, and will not be repeated here.

In the absence of contradiction, the steps in this implementation or embodiment and their optional examples may be arbitrarily combined and their order may be arbitrarily exchanged, and this implementation or embodiment and their optional examples may be arbitrarily combined with other implementations or embodiments and their optional examples.

In the above embodiment, the first core network node may determine the priority indication information and send the priority indication information to the RAN device, and the RAN device may perform the PDU discarding based on the priority indication information. A resource priority scheduling mechanism for a QoS flow and a data packet is improved. The service scenarios may be better matched and the data transmission QoS of the service may be ensured.

In some optional embodiments, the present disclosure provides the priority indication information, the priority indication information is used to indicate the priority levels of the plurality of types of parameters for PDU discarding. In a case where the plurality of types of parameters at least include the QoS priority parameter and the PDU set importance parameter, the priority indication information is used to indicate the priority levels or preference of the QoS priority parameter and the PDU set importance parameter for PDU discarding.

Illustratively, the priority indication information may be provided by the AF to the first core network node. Optionally, the AF may send the priority indication information to the first core network node during an AF QoS request procedure.

Illustratively, the priority indication information may be determined by a PCF based on local configuration information, user subscription information, operator policy, etc.

Illustratively, the priority indication information may be determined based on information provided by the AF.

Illustratively, the priority indication information may be determined by the PCF based on both the information provided by the AF and the local configuration information of the PCF.

That is, the PCF determines the priority indication information based on the information provided by the AF and/or the local configuration information.

The priority indication information may be sent to the RAN device (additionally, the priority indication is included in the QoS profile to be sent to the NG-RAN) so that the RAN device may use the priority indication information in a network congestion scenario.

One manner is that the first core network node sends the priority indication information to the RAN device via the second core network node and the control plane node during a PDU session modification procedure.

Another manner is that the first core network node sends the priority indication information to the RAN device via the second core network node and the data plane node. The data plane node may send the priority indication information to the RAN device via the message header of the user plane message of the PDU.

In a possible implementation, the priority indication information may be used to indicate at least one of:
a priority level of the PDU set importance parameter being higher than a priority level of the QoS priority parameter for the PDU discarding;
a priority level of the QoS priority parameter being higher than a priority level of the PDU set importance parameter for the PDU discarding;
priority levels of the QoS priority parameter and the PDU set importance parameter for the PDU discarding in different conditions;
a priority level of part of parameter values included in the PDU set importance parameter being higher than the priority level of the QoS priority parameter for the PDU discarding;
a priority level of part of parameter values included in the QoS priority parameter being higher than the priority level of the PDU set importance parameter for the PDU discarding; or
the QoS priority parameter being independently used for cross-flow PDU discarding, and the PDU set importance parameter being independently used for inner-flow PDU discarding.

For the second core network node, the priority indication information may be sent to the second core network node as part of the PCC rule, and the second core network node may send the priority indication information to the RAN device as part of the QoS profile.

For the RAN device, if the priority indication information is received, the priority indication information may be applied to the PDU discarding.

In a case where the priority indication information indicates that the priority level of the PDU set importance parameter is higher than the priority level of the QoS priority parameter, in a case of network congestion, the RAN device may use the PDU set importance parameter to discard the corresponding PDU set, and in a case where the stop discarding condition is not fulfilled, the RAN device may continue to use the QoS priority parameter to discard the QoS flow.

In a case where the priority indication information indicates that the priority level of the QoS priority parameter is higher than the priority level of the PDU set importance parameter, in the case of network congestion, the RAN device may prioritize discarding the QoS flow, and in a case where the stop discarding condition is not fulfilled, the RAN device may continue to use the PDU set importance parameter to discard the corresponding PDU set.

In a case where the priority indication information indicates that the PDU set importance parameter is prioritized over the QoS priority parameter based on different conditions (e.g., network congestion level), in the case of network congestion, the RAN device may change the priority order based on a first condition. For example, the PDU Set importance parameter is used for PDU set level packet discarding when the network congestion level is low, and it is switched to the QoS priority level for the QoS flow discarding when the congestion level is middle and high.

In a case where the priority indication information indicates that the QoS priority parameter is used independently for the cross-flow PDU discarding and the PDU set importance parameter is used independently for the inner-flow PDU discarding, the RAN device uses them for the following discarding independently.

In a case where QoS requirements cannot be fulfilled for one or more QoS flows, the PDU set importance parameter shall be used to select a specific PDU set in the QoS flow to be discarded, so as to meet the QoS requirements. For example, in a case where the minimum parameter value of the PDU set importance parameter may correspond to the highest importance level of the PDU set, an importance level of the PDU set with the PDU set importance parameter value being N is higher than importance levels of the PDU sets with the PDU set importance parameter values being N+1 and N+2.

In the case of network congestion, when all QoS requirements cannot be fulfilled for one or more QoS flows, the QoS priority parameter shall be used to select which QoS flow to discard first.

Illustratively, in a case where the minimum parameter value of the QoS priority parameter may correspond to the highest importance level of the QoS flow, the priority level of the QoS flow with a QoS priority parameter value being N is higher than priority levels of the QoS flows with QoS priority parameter values being N+1 and N+2.In a case where the RAN device performs the PDU discarding, it is requited to prioritize discarding the QoS flow with a low QoS priority level.

In addition, a scheduling module of the RAN device may prioritize QoS flows based on other parameters (e.g., resource type, radio condition) to optimize application performance and network capacity.

In an embodiment of the present disclosure, the priority indication information may be sent to the RAN device in an explicit manner, or sent to the RAN device in an implicit manner. For example, in a case where the first core network node sends no priority indication information to the RAN device, the RAN device determines that the priority indication information is used to indicate that each type of parameter is applied to cross-flow or inner-flow PDU discarding independently.

In the above embodiments, a resource priority scheduling mechanism for a QoS flow and a data packet is improved. Service scenarios may be better matched and data transmission QoS of a service may be ensured.

In some optional embodiments, referring to FIG. 6A, FIG. 6A is a flow chart of a data processing method according to an embodiment. The method includes the following steps.

Step 601a, the following steps of a PDU session establishment procedure are performed.

Step 1, a terminal sends a PDU session establishment request message to an AMF.

Step 2, an AMF performs SMF selection.

Step 3, the AMF sends an Nsmf_PDUSession_CreateSMContext Request message to the selected SMF.

Step 4, the SMF interacts with a PCF and a unified data management (UDM) to perform subscription retrieval, subscription for updates, etc.

Step 5, the SMF returns Nsmf_PDUSession_CreateSMContext Response message to the AMF.

Step 6, PDU session identity authentication and authorization.

Step 7a, the SMF performs PCF selection.

Step 4 and step 7a are optional.

Step 601b, the AF may send information to the PCF via a Nnef_AFsessionWithQoS_Create request.

The information sent by the AF may include QoS parameters for each PDU set within the QoS flow, and parameters on frame identification.

The AF may also provide these information to the core network node prior to the PDU session establishment, which may include priority indication information.

The priority indication information may be provided to the PCF together with PDU set related assistance information. The PDU set related assistance information may include the following QoS parameters for each PDU set within the QoS flow:
- PDU set handling indication information, used to indicate if PDU set based handling should be activated to a flow. This indication may be implicitly indicated via other PDU Set related information provided by the AF.
- whether all PDUs are needed for the usage of PDU set by application layer;
- PDU set delay budget (PSDB);
- PDU set error rate (PSER).

The step 601b is an optional execution step, that is, the AF may send no information to the PCF.

Step 602, the PCF generates appropriate PCC rule information, which may include PDU set related QoS parameters. The PCF sends the PCC rule information to the SMF.

If the AF does not provide the priority indication information to the PCF, the PCF may determine the priority indication information based on local configuration, subscription, or operator policy, etc.

The priority indication information may be sent by the PCF to the SMF as part of the PCC rule. The SMF sends the priority indication information to the RAN device as part of the QoS profile.

The PDU set related QoS parameters may be new QoS parameters for PDU set based QoS handling in the core network node, and may further include the following parameters:
- PSDB;
- PSER;
- whether all PDUs are needed for the usage of PDU set by application layer;
- whether to drop a PDU set in case the PSDB is exceeded.

Step 602 may be done in the following steps in the PDU session establishment procedure or the PDU session modification procedure:

The SMF interacts with the PCF to perform SM policy association establishment or SM policy association modification initiated by SMF.

If step 602 is triggered by step 601b, the PCF generates the PCC rule considering the information provided by the AF.

Step 603, the SMF generates a QoS profile and N4 rule information based on the PCC rule information from PCF. The SMF sends the N4 rule information to the UPF, and sends the QoS profile to the RAN device via the AMF (not shown in FIG. 6A).

The priority indication information is sent to the SMF as part of the PCC rule.

The SMF sends the priority indication information to the RAN device via the AMF as part of the QoS profile. Or, via the UPF, the UPF may send the priority indication information to the RAN device via the downlink GTP-U header of the PDU.

Step 603 is completed through steps 8-15 in the PDU session establishment procedure or steps 2-7 in the PDU session modification procedure, in which, steps 8-15 in the PDU session establishment procedure include:

Step 8, the SMF performs UPF selection.

Step 9, the SMF interacts with the UPF to perform initial SM policy association modification.

Step 10a, the SMF sends an N4 Session Establishment Request message or an N4 Session Modification Request message to the UPF.

Step 10b, the UPF sends an N4 Session Establishment Response message or an N4 Session Modification Response message to the SMF.

Step 11, the SMF and the AMF exchange an N1N2 transmission (Namf_Communication_N1N2MessageTransfer) message.

Step 12, the AMF sends an N2 PDU Session Request message to the RAN device.

Step 13, the terminal and the RAN device may perform AN specific resource setup (PDU session establishment accept).

Step 14, the RAN device returns an N2 PDU Session Response message to the AMF.

Step 15, the AMF sends an SM context update request (Nsmf_PDUSession_UpdateSMContext Request) message to the SMF.

The above steps 7b, 9, 10a, and 10b are optional steps.

Step 604 may be performed according to other procedures of session establishment or modification.

Step 604 is an optional step, that is, after step 603, step 605 may be continued.

Step 605, based on the received N4 rule information or the local configuration on the UPF, the UPF identifies the related information and performs the PDU set based QoS handling according to the N4 rule instruction.

The UPF identifies the PDUs that belong to a PDU set and the following information for each PDU set:
1. information for intra-PDU set handling, including the following parameters of:
   - PDU set sequence number (SN);
      in which, the UPF may use a QoS flow identity (ID) to identify the QoS flow, and use the PDU set SN to identify each PDU set within the QoS flow, each QoS flow can be used to deliver one or more PDU sets;
   - start PDU and/or end PDU of the PDU set;
   - PDU SN within the PDU set; or
   - the number of PDUs within the PDU set.
2. information for inter-PDU Set handling, including the following parameter:
   - PDU set importance.

The UPF identifies the related information via the described methods or mechanisms as follows:
Option 1: by matching real-time transport protocol (RTP)/ spanning tree protocol (SRTP) header and payload;
Option 2: new RTP extension header;
Option 3: by information provided by an access stratum (AS) in N6 encapsulation header, e.g., GTP-U;
Option 4: by detection based on traffic characteristics,
Option 5: by non-standardized mechanisms implementation unified scheme framework.

Step 606, the UPF node sends the PDU set information to the RAN device. The UPF provides the above PDU set related information (listed in step 605) to the RAN device.
- For the PDU set importance parameter, optionally:
   Option 1: the UPF classifies downlink (DL) traffics into different QoS flows based on the PDU Set importance parameter;
   Option 2: the UPF classifies the DL traffics into different sub-QoS flows based on the PDU set importance parameter;
   Option 3: the UPF adds the PDU set importance parameter into the GTP-U header,

For other PDU set related information indicated in step 605, the UPF adds them to the GTP-U header.

The step 606 is an optional execution step, that is, the UPF node may not execute step 606 in a case of receiving no priority indication information sent by the UPF.

Step 607, based on the PDU set related information received in step 606, the RAN device performs the PDU set based QoS handling.

If the NG-RAN receives a priority indication, the NG-RAN applies them for the PDU discarding.

Of course, in step 607, the RAN device may also directly perform the PDU set based QoS handling. At this case, the RAN device determines the priority indication information is used to indicate that each type of parameter is applied to cross-flow or inner-flow PDU discarding independently, and then performs the PDU discarding based on the priority indication information. The specific implementation method has been introduced in the above embodiment and will not be repeated here.

The steps in an upper dashed box in FIG. 6A complete the PDU session establishment, and the steps in a lower dashed box are used for the RAN device to perform the PDU discarding based on the received priority indication information.

In the absence of contradiction, the steps in this implementation or embodiment and their optional examples may be arbitrarily combined and their order may be arbitrarily exchanged, and this implementation or embodiment and their optional examples may be arbitrarily combined with other implementations or embodiments and their optional examples.

In the above embodiment, during the PDU session establishment procedure, the PCF may determine the priority indication information and provide the priority indication information to the RAN device, and the RAN device may perform the PDU discarding based on the priority indication information. Thus a resource priority scheduling mechanism for a QoS flow and a data packet is improved, service scenarios may be better matched and the data transmission QoS of a service may be ensured.

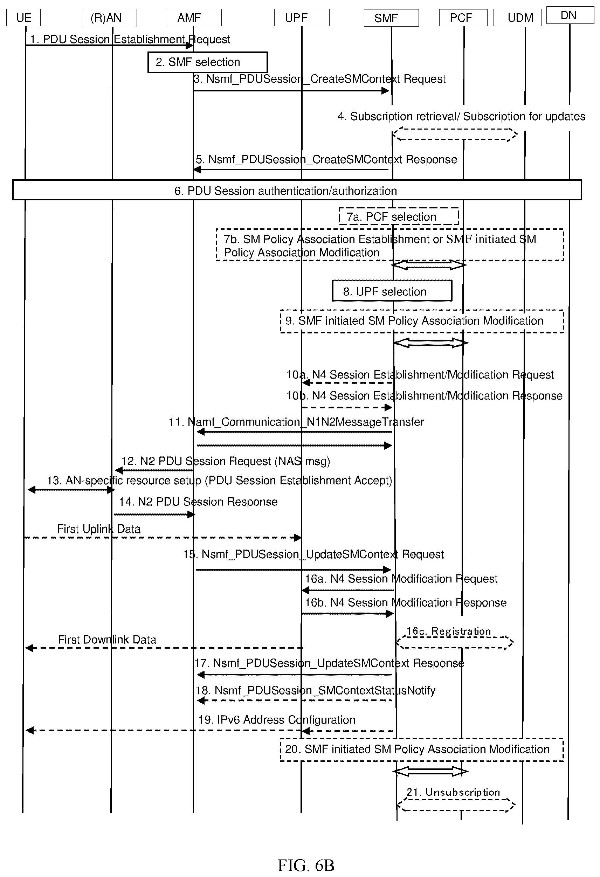

In some optional embodiments, referring to FIG. 6B, FIG. 6B is a flow chart of a PDU session establishment method according to an embodiment. The method includes the following steps.
Step 1, a terminal sends a PDU session establishment request message to an AMF;
Step 2, an AMF performs SMF selection
Step 3, the AMF sends an Nsmf_PDUSession_CreateSMContext Request message to the selected SMF.
Step 4, the SMF interacts with a PCF and a unified data management (UDM) to perform subscription retrieval, subscription for updates, etc.
Step 5, the SMF returns Nsmf_PDUSession_CreateSMContext Response message to the AMF.
Step 6, PDU session identity authentication and authorization.
Step 7a, the SMF performs PCF selection.
Step 7b, the SMF interacts with the PCF to perform SM policy association establishment or SM policy association modification initiated by SMF.
Step 8, the SMF performs UPF selection.
Step 9, the SMF interacts with the UPF to perform initial SM policy association modification.
Step 10a, the SMF sends an N4 Session Establishment Request message or an N4 Session Modification Request message to the UPF.
Step 10b, the UPF sends an N4 Session Establishment Response message or an N4 Session Modification Response message to the SMF.
Step 11, the SMF and the AMF exchange an N1N2 transmission (Namf_Communication_N1N2MessageTransfer) message.
Step 12, the AMF sends an N2 PDU Session Request message to the RAN device.
Step 13, the terminal and the RAN device may perform AN specific resource setup (PDU session establishment accept).
Step 14, the RAN device returns an N2 PDU Session Response message to the AMF.
Step 15, the AMF sends an SM context update request (Nsmf_PDUSession_UpdateSMContext Request) message to the SMF.

The subsequent steps will not be described in detail, please refer to FIG. 6B.

Based on the above PDU session establishment procedure, the present disclosure may first execute steps 1-7a of the PDU session establishment procedure.

Furthermore, the SMF may perform the SM policy association establishment procedures to establish an SM policy association with the PCF and obtain default PCC rule information for the PDU session.

Accordingly, the PCF may provide policy information to the SMF.

If the AF provides no priority indication information, the PCF may determine the priority indication information based on local configuration, user subscription information, or operator policy, etc.

The PCF sends the priority indication information to the SMF as part of the PCC rules from the PCF. The SMF sends the priority indication information to the RAN device as part of the QoS profile.

The PDU set related QoS parameters may be new QoS parameters for PDU set based QoS handling in the core network node, and may further include the following parameters:
- PSDB;
- PSER;
- whether all PDUs are needed for the usage of PDU set by application layer;
- whether to drop a PDU set in case the PSDB is exceeded.

Further, steps 8-15 in the PDU session establishment procedure are performed.

The SMF generates a QoS profile and N4 rule information based on the PCC rule information from PCF. The SMF sends the N4 rule information to the UPF, and sends the QoS profile to the RAN device via the AMF.

The priority indication information is sent to the SMF as part of the PCC rule.

The SMF sends the priority indication information to the RAN device via the AMF as part of the QoS profile. Or, via the UPF, the UPF may send the priority indication information to the RAN device via the downlink GTP-U header of the PDU.

The process of performing, by the RAN device, the PDU discarding based on the priority indication information may be similar to steps 605 to 607 above, which will not be repeated herein.

In the absence of contradiction, the steps in this implementation or embodiment and their optional examples may be arbitrarily combined and their order may be arbitrarily exchanged, and this implementation or embodiment and their optional examples may be arbitrarily combined with other implementations or embodiments and their optional examples.

In the above embodiment, during the PDU session establishment procedure, the PCF may determine the priority indication information and provide the priority indication information to the RAN device, and the RAN device may perform the PDU discarding based on the priority indication information. Thus a resource priority scheduling mechanism for a QoS flow and a data packet is improved, service scenarios may be better matched and the data transmission QoS of a service may be ensured.

Corresponding to the aforementioned application function implementation method embodiments, the present disclosure also provides an application function implementation device embodiments.

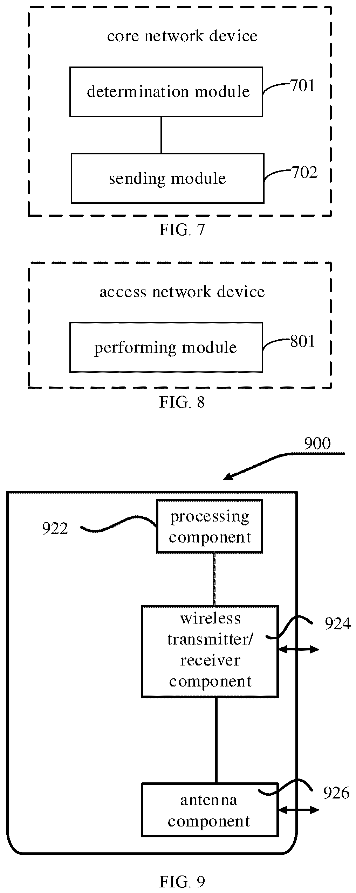

Referring to FIG. 7, FIG. 7 is a block diagram of a core network device according to an illustrative embodiment. The device includes:
a determination module 701, configured to determine priority indication information, in which, the priority indication information is used to indicate priority levels of a plurality of types of parameters for PDU discarding;
a sending module 702, configured to send the priority indication information to an RAN device.

Referring to FIG. 8, FIG. 8 is a block diagram of an access network device according to an illustrative embodiment. The device includes:
a performing module 801, configured to perform PDU discarding based on priority indication information, in which, the priority indication information is used to indicate priority levels of a plurality of types of parameters for the PDU discarding.

For the device embodiments, since they basically correspond to the method embodiments, for the relevant parts reference can be made to the description of the method embodiments. The device embodiments described above are only illustrative, in which, the units described above as separate components may or may not be physically separated, and the components displayed as units may or may not be physical units, that is, they may be located in one place, or they may be distributed on a plurality of network units. Some or all of the modules may be selected according to actual needs to achieve the purpose of the solution of the disclosure. Those ordinary skilled person in the art may understand and implement the disclosure without creative work.

Correspondingly, the present disclosure also provides a computer-readable storage medium, having a computer program stored thereon. The computer program is used to perform any of the data processing methods described above on the first core network node side.

Correspondingly, the present disclosure further provides a computer-readable storage medium, having a computer program stored thereon. The computer program is used to perform any of the data processing methods described above on the RAN device side.

Accordingly, the present disclosure also provides a core network device, including:
a processor;
a memory for storing executable instructions of the processor;
in which, the processor is configured to execute any of the data processing methods described above on the first core network node side.

As shown in FIG. 9, FIG. 9 is a schematic diagram of a structure of a core network device 900 according to an illustrative embodiment. Referring to FIG. 9, the device 900 includes a processing component 922, a wireless transmission/reception component 924, an antenna component 926, and a signal processing part specific to a wireless interface. The processing component 922 may further include at least one processor.

One of the processors in the processing component 922 may be configured to execute any of the data processing methods described above on the first core network node side.

Accordingly, the present disclosure also provides an access network device, including:
a processor;
a memory for storing executable instructions of the processor;
in which, the processor is configured to execute any of the data processing methods described above on the RAN device side.

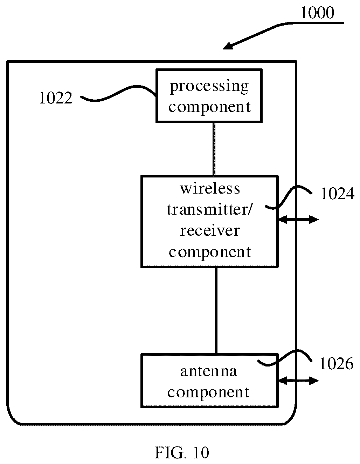

As shown in FIG. 10, FIG. 10 is a schematic diagram of a structure of an access network device 1000 according to an illustrative embodiment. The device 1000 may be provided as an RAN device, such as a base station. Referring to FIG. 10, the device 1000 includes a processing component 1022, a wireless transmission/reception component 1024, an antenna component 1026, and a signal processing part specific to a wireless interface. The processing component 1022 may further include at least one processor.

One of the processors in the processing component 1022 may be configured to execute any of the data processing methods described above on the RAN device side.

The above embodiments or examples are not exhaustive, but are only illustrative of some embodiments or examples, and are not intended to be specific limitations on the scope of protection of the embodiments of the present disclosure. In the absence of contradiction, each step in a certain embodiment or example may be implemented as an independent embodiment, and the steps may be arbitrarily combined. For example, the solution after removing some steps in a certain embodiment or example may also be implemented as an independent embodiment, and the order of the steps in a certain embodiment or example may be arbitrarily exchanged. In addition, the optional methods or optional examples in a certain embodiment or example may be arbitrarily combined; in addition, the various embodiments or examples may be arbitrarily combined, for example, some or all steps of different embodiments or examples may be arbitrarily combined, and a certain embodiment or example may be arbitrarily combined with the optional methods or optional examples of other embodiments or examples.

In the present disclosure, "including A" and "used to indicate A" may mean directly including or carrying A, or may mean indirectly indicating A without necessarily carrying A, depending on the circumstances.

In the present disclosure, "in response to," "in the case of," "when", "upon," "in response to determining", etc. may be replaced with each other depending on the circumstances.

In addition, regarding the expressions, such as "A or B", "A and/or B", "at least one of A and B", "A in one case, B in another case", "in response to one case A, in response to another case B", etc., in the present disclosure, they may include at least one of the following schemes according to circumstances: executing A independently of B, that is, executing A in some embodiments; executing B independently of A, that is, executing B in some embodiments; selectively executing A and B, that is, executing by selecting from A and B in some embodiments; executing both A and B, that is, executing A and B in some embodiments.

In addition, each element, each row, or each column in the table involved in the present disclosure can be implemented as an independent embodiment, and the combination of any elements, any rows, and any columns can also be implemented as an independent embodiment.

Those skilled in the art will readily appreciate other embodiments of the present disclosure after considering the specification and practicing the invention disclosed herein. The present disclosure is intended to cover any variations, uses or adaptations of the present disclosure that follow the general principles of the present disclosure and include common knowledge or customary techniques in the art that are not disclosed in the present disclosure. The description and examples are to be considered as examples only, and the true scope and spirit of the present disclosure are indicated by the appended claims.

It should be understood that the present disclosure is not limited to the exact structures that have been described above and shown in the drawings, and that various modifications and changes may be made without departing from the scope of the present disclosure. The scope of the present disclosure is limited only by the appended claims.

## Claims

1. A data processing method, performed by a first core network node, comprising:
determining priority indication information, wherein the priority indication information is used to indicate priority levels of a plurality of types of parameters for packet data unit (PDU) discarding.

2. The method according to claim 1, wherein the priority indication information is used to indicate at least one of:
a first priority order of the plurality of types of parameters for the PDU discarding;
second priority orders of the plurality of types of parameters for the PDU discarding in different conditions;
a third priority order of part of parameter values comprised in one type of parameter over other types of parameters for the PDU discarding; or
each type of parameter being applied to cross-flow or inner-flow PDU discarding independently.

3. The method according to claim 1 or 2, wherein the plurality of types of parameters comprise at least one of:
a quality of service (QoS) priority parameter; or
a PDU set importance parameter.

4. The method according to any one of claims 1 to 3, wherein, in a case where the priority indication information is used to indicate that each type of parameter is applied to cross-flow or inner-flow PDU discarding independently, a QoS priority parameter is used for cross-flow PDU discarding, and a PDU set importance parameter is used for inner-flow PDU discarding.

5. The method according to claim 4, wherein the priority indication information is further used to indicate at least one of:
in response to performing the cross-flow PDU discarding, determining a QoS flow to be discarded based on the QoS priority parameter, and discarding a corresponding QoS flow according to an ascending order of QoS priority levels; or
in response to performing the inner-flow PDU discarding, determining a PDU set to be discarded based on the PDU set importance parameter, and discarding a corresponding PDU set according to an ascending order of PDU set importance levels.

6. The method according to any one of claims 1 to 5, the method according to claim 1, wherein determining the priority indication information comprises at least one of:
determining the priority indication information based on information provided by an application function (AF); or
determining the priority indication information based on local configuration information of the first core network node.

7. The method according to any one of claims 1 to 6, wherein determining the priority indication information comprises:
in response to receiving no priority indication information provided by an AF, determining that the priority indication information is used to indicate that each type of parameter is applied to cross-flow or inner-flow PDU discarding independently.

8. The method according to any one of claims 1 to 7, further comprising:
sending the priority indication information to a radio access network (RAN) device.

9. The method according to claim 8, wherein sending the priority indication information to the RAN device comprises:
sending the priority indication information to a second core network node, to enable the second core network node to send the priority indication information to the RAN device through a control plane node or a data plane node.

10. The method according to any one of claims 1 to 7, further comprising:
sending no priority indication information to the RAN device in response to determining that the priority indication information is used to indicate that each type of parameter is applied to cross-flow or inner-flow PDU discarding independently.

11. The method according to any one of claims 1-10, wherein the priority indication information is used to indicate the priority levels of the plurality of types of parameters for the PDU discarding in a network congestion scenario.

12. A data processing method, performed by a radio access network (RAN) device, comprising:
performing packet data unit (PDU) discarding based on priority indication information, wherein the priority indication information is used to indicate priority levels of a plurality of types of parameters for the PDU discarding.

13. The method according to claim 12, wherein the priority indication information is used to indicate at least one of:
a first priority order of the plurality of types of parameters for the PDU discarding;
second priority orders of the plurality of types of parameters for the PDU discarding in different conditions;
a third priority order of part of parameter values comprised in one type of parameter over other types of parameters for the PDU discarding; or
each type of parameter being applied to cross-flow or inner-flow PDU discarding independently.

14. The method according to claim 12 or 13, wherein the plurality of types of parameters comprise at least one of:
a quality of service (QoS) priority parameter; or
a PDU set importance parameter.

15. The method according to any one of claims 12 to 14, wherein, in a case where the priority indication information is used to indicate that each type of parameter is applied to cross-flow or inner-flow PDU discarding independently, a QoS priority parameter is used for cross-flow PDU discarding, and a PDU set importance parameter is used for inner-flow PDU discarding.

16. The method according to claim 15, wherein the priority indication information is further used to indicate at least one of:
in response to performing the cross-flow PDU discarding, determining a QoS flow to be discarded based on the QoS priority parameter, and discarding a corresponding QoS flow according to an ascending order of QoS priority levels; or
in response to performing the inner-flow PDU discarding, determining a PDU set to be discarded based on the PDU set importance parameter, and discarding a corresponding PDU set according to an ascending order of PDU set importance levels.

17. The method according to any one of claims 12 to 16, wherein performing the PDU discarding based on the priority indication information comprises:
in response to the priority indication information being used to indicate a first priority order of the plurality of types of parameters for the PDU discarding, determining a first-type parameter sequentially according to the first priority order; and
every time determining one first-type parameter, among a plurality of parameter values comprised in the first-type parameter, discarding a PDU corresponding to each of the parameter values sequentially according to a specified order of the parameter values.

18. The method according to any one of claims 12 to 16, wherein performing the PDU discarding based on the priority indication information comprises:
in response to the priority indication information being used to indicate second priority orders of the plurality of types of parameters for the PDU discarding in different conditions, determining a first-type parameter sequentially according to the second priority orders of the plurality of types of parameters in a first condition; and
every time determining one first-type parameter, among a plurality of parameter values comprised in the first-type parameter, discarding a PDU corresponding to each of the parameter values sequentially according to a specified order of the parameter values.

19. The method according to any one of claims 12 to 16, wherein performing the PDU discarding based on the priority indication information comprises:
in response to the priority indication information being used to indicate a third priority order of part of parameter values comprised in one type of parameter over other types of parameters for the PDU discarding, determining first parameter values sequentially according to the third priority order; and
discarding a PDU corresponding to each of the first parameter values sequentially.

20. The method according to any one of claims 12 to 16, wherein performing the PDU discarding based on the priority indication information comprises:
in response to the priority indication information being used to indicate that each type of parameter is applied to cross-flow or inner-flow PDU discarding independently, performing the cross-flow PDU discarding or the inner-flow PDU discarding, respectively.

21. The method according to claim 20, wherein performing the cross-flow PDU discarding or the inner-flow PDU discarding, respectively, comprises at least one of:
in response to the QoS priority parameter being used for the cross-flow PDU discarding, the PDU set importance parameter being used for the inner-flow PDU discarding, and determining that the cross-flow PDU discarding is to be performed, discarding a corresponding QoS flow sequentially according to a descending order of QoS priority levels; or
in response to determining that the inner-flow PDU discarding is to be performed, performing discarding of a PDU set within a QoS flow sequentially according to an ascending order of PDU set importance levels.

22. The method according to any one of claims 12 to 21, further comprising:
receiving the priority indication information sent by a first network side node.

23. The method according to claim 22, wherein receiving the priority indication information sent by the first network side node comprises any one of:
receiving the priority indication information sent by a second network side node to an RAN device through a control plane node, wherein the priority indication information is sent by the first network side node to the second network side node; or
receiving the priority indication information sent by the second network side node to the RAN device through a data plane node, wherein the priority indication information is sent by the first network side node to the second network side node.

24. The method according to any one of claims 12 to 21, further comprising:
in response to receiving no priority indication information, determining that the priority indication information is used to indicate that each type of parameter is applied to cross-flow or inner-flow PDU discarding independently.

25. The method according to any one of claims 12 to 24, wherein performing the PDU discarding based on the priority indication information comprises:
in response to being in a network congestion scenario, performing the PDU discarding based on the priority indication information.

26. A core network device, comprising:
a determination module, configured to determine priority indication information, wherein the priority indication information is used to indicate priority levels of a plurality of types of parameters for packet data unit (PDU) discarding;
a sending module, configured to send the priority indication information to a radio access network (RAN) device.

27. An access network device, comprising:
a performing module, configured to perform packet data unit (PDU) discarding based on priority indication information, wherein the priority indication information is used to indicate priority levels of a plurality of types of parameters for the PDU discarding.

28. A computer-readable storage medium having a computer program stored thereon, wherein the computer program is configured to perform the data processing method according to any one of claims 1 to 11.

29. A computer-readable storage medium having a computer program stored thereon, wherein the computer program is configured to perform the data processing method according to any one of claims 12 to 25.

30. A core network device, comprising:
a processor; and
a memory for storing executable instructions of the processor;
wherein the processor is configured to perform the data processing method according to any one of claims 1 to 11.

31. An access network device, comprising:
a processor; and
a memory for storing executable instructions of the processor;
wherein the processor is configured to perform the data processing method according to any one of claims 12-25.
